# EUROPEAN PATENT APPLICATION

(11) **EP 1 906 099 A2**
(43) Date of publication of application: **02.04.2008**
(21) Application number: 07111915.0
(22) Date of filing: 06.07.2007
(51) Int. Cl.: F24C 15/32

(54) **Cooking apparatus and control method thereof**

(30) Priority: 27.09.2006 KR 20060094439
(71) Applicant: Samsung Electronics Co., Ltd., Yeongtong-gu Suwon-si, Gyeonggi-do (KR)
(72) Inventor: Jeon, Ki Suk, Imae-dong, Bundang-gu, Seongnam-si, Gyeonggi-do (KR); Shozo, Kobayashi, Youngtong-dong, Paldal-gu, Suwon-shi, Gyeonggi-do (KR); Hong, Seok Weon, Suji-eup, Yongin-si, Gyeonggi-do (KR); Shon, Jong Chull, Suwon-si, Gyeonggi-do (KR); Kim, Hyang Ki, Gwonseon-gu, Suwon-si, Gyeonggi-do (KR)
(74) Representative: Grünecker, Kinkeldey, Stockmair & Schwanhäusser Anwaltssozietät

(57) **Abstract**

Disclosed are a cooking apparatus and a control method thereof, in which water remaining in a water feeding tube (63) is rapidly removed when a water bucket (61) storing water required to generate steam is separated from the cooking apparatus. The cooking apparatus includes a water bucket (61), a steam generator (50), a water feeding pump (64) feeding water contained in the water bucket to the steam generator through a water feeding tube (63), a sensor unit (67) to detect whether the water bucket (61) is separated from the cooking apparatus, and a control unit (110) controlling an operation of the water feeding pump based on a signal provided thereto from the sensor unit.

## Description

### BACKGROUND OF THE INVENTION

### 1. Field of the Invention

The present invention relates generally to a cooking apparatus for cooking food by using steam. More particularly, the present invention relates to a cooking apparatus and a control method thereof, in which water remaining in a water feeding tube is removed when a water bucket storing water required for generating steam is separated from the cooking apparatus.

### 2. Description of the Related Art

In general, cooking apparatuses for cooking food are classified into microwave ovens, gas ovens and electric ovens. The microwave ovens use microwaves and the gas and electric ovens use burners or heaters to cook the food.

From among the above cooking apparatuses, the gas and electric ovens cook the food by directly applying heat to the food, so the food is oxidized due to oxygen contained in air, thereby causing bad tasting and unhealthy foods. In addition, when a steam vessel is used to cook the food, the food contains too much moisture, so that the taste of the food is degraded and the cooking time is lengthened.

In the case of the microwave oven that irradiates microwaves to cook the food, the food may be locally over-heated or undercooked if the microwaves are unevenly irradiated onto the food. Thus, uniform cooking is difficult and the taste of the food is degraded because the food is easily dried.

In order to solve the above problems, Japanese Unexamined Patent Publication No. 2004-205130 discloses a method of cooking healthy food with good flavor by using steam.

A cooking apparatus disclosed in the above Japanese Unexamined Patent Publication includes a saturated steam generator for converting water fed from a water feeding device into saturated steam, a superheated steam generator for generating superheated steam by heating the saturated steam, and a hot wind generator for feeding hot wind together with or separate from the superheated steam in order to heat the food.

A great amount of steam having high pressure circulates in a cooking chamber according to rotation of a circulation fan, so that high-temperature steam is evenly applied onto the food due to convection currents in the cooking chamber. Thus, the food is uniformly cooked while properly maintaining moisture therein, so that food with a good flavor can be obtained.

The cooking apparatus using steam is provided with a water bucket for storing water used for generating steam and a water feeding tube for feeding water into the steam generator. However, when the user separates the water bucket from the cooking apparatus (in detail, a water bucket case), water remaining in the water feeding tube and a connector provided between the water bucket and the water feeding tube may fall, thereby causing a short circuit of electric parts installed adjacent to the water bucket while also being unsanitary.

### SUMMARY OF THE INVENTION

Accordingly, it is an aspect of the present invention to solve the above-mentioned problems occurring in the related art. It is also an aspect of the present invention to provide a cooking apparatus and a control method thereof, in which water remaining in a water feeding tube is removed when a water bucket storing water required to generate steam is separated from the cooking apparatus.

Additional aspects and/or advantages of the invention will be set forth in part in the description which follows and, in part, will be apparent from the description, or may be learned by practice of the invention.

The foregoing and/or other aspects are achieved by providing a cooking apparatus cooking food by using steam, the cooking apparatus comprising: a water bucket; a steam generator; a water feeding tube; a water feeding pump feeding water contained in the water bucket to the steam generator through the water feeding tube; a sensor detecting whether the water bucket is separated from the water feeding pump; and a control unit controlling an operation of the water feeding pump based on the detecting of the sensor.

If the sensor unit detects the water bucket being separated from the cooking apparatus, the controller operates the water feeding pump to introduce water remaining in the water feeding tube into the steam generator.

The sensor unit may include a limit sensor, a contact sensor, a pressure sensor, or a micro-switch installed at a connection part between the water bucket and the water feeding tube to detect the water bucket when the water bucket is separated from the water feeding tube.

The foregoing and/or other aspects may also be achieved by providing a cooking apparatus cooking food by using steam, the cooking apparatus comprising: a water bucket; a steam generator; a connector; a water feeding tube; a water feeding pump feeding water contained in the water bucket to the steam generator through the connector and the water feeding tube; a sensor unit detecting whether the water bucket is separated from the water feeding tube; and a control unit operating the water feeding pump to introduce water remaining in the water feeding tube and the connector into the steam generator when the sensor unit detects the water bucket being separated from the water feeding tube.

The sensor unit may include a limit sensor, a contact sensor, a pressure sensor, or a micro-switch installed at a connection part between the water bucket and the water feeding tube to detect the water bucket when the water bucket is separated from the water feeding tube.

The foregoing and/or other aspects may also be achieved by providing a method of controlling a cooking apparatus cooking food by using steam, the cooking apparatus including a water bucket, a steam generator, and a water feeding pump feeding water contained in the water bucket to the steam generator through a water feeding tube, the method comprising: detecting whether the water bucket is separated from the water feeding tube; and operating the water feeding pump, thereby introducing water remaining in the water feeding tube into the steam generator, when the sensor unit detects the water bucket being separated from the water feeding tube.

The water bucket being separated from the water feeding tube may be a signal generated from a limit sensor, a contact sensor, a pressure sensor, or a micro-switch installed at a contact position between the water bucket and the water feeding tube.

The method further includes stopping an operation of the water feeding pump when water remaining in the water feeding tube has been completely introduced into the steam generator by counting an operation time of the water feeding pump.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a front view illustrating the structure of a cooking apparatus according to an embodiment of the present invention;
FIG. 2 is a perspective view illustrating the structure of a cooking apparatus according to an embodiment of the present invention;
FIG. 3 is a sectional view illustrating the structure of a cooking apparatus according to an embodiment of the present invention;
FIG. 4 is a sectional view showing a water bucket installed in a cooking apparatus according to an embodiment of the present invention;
FIG. 5 is a sectional view showing a water bucket separated from a cooking apparatus according to an embodiment of the present invention;
FIG. 6 is a block view illustrating the structure of a cooking apparatus according to an embodiment of the present invention; and
FIG. 7 is a flowchart illustrating a control procedure for a cooking apparatus according to an embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

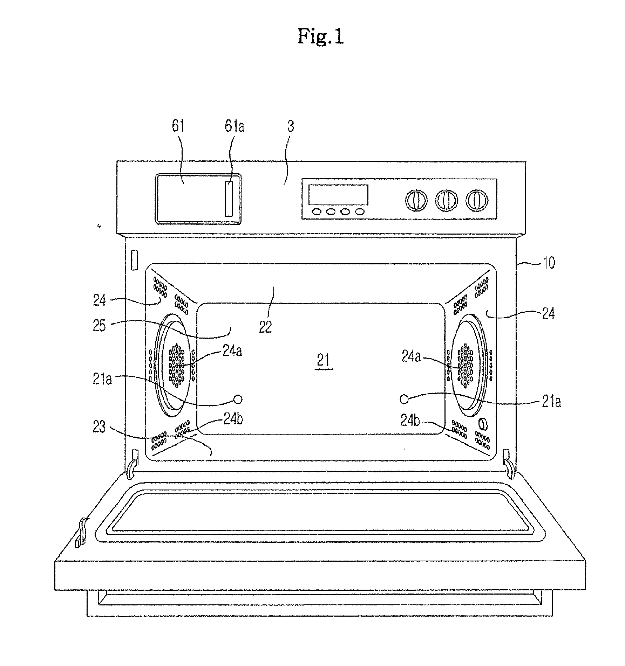

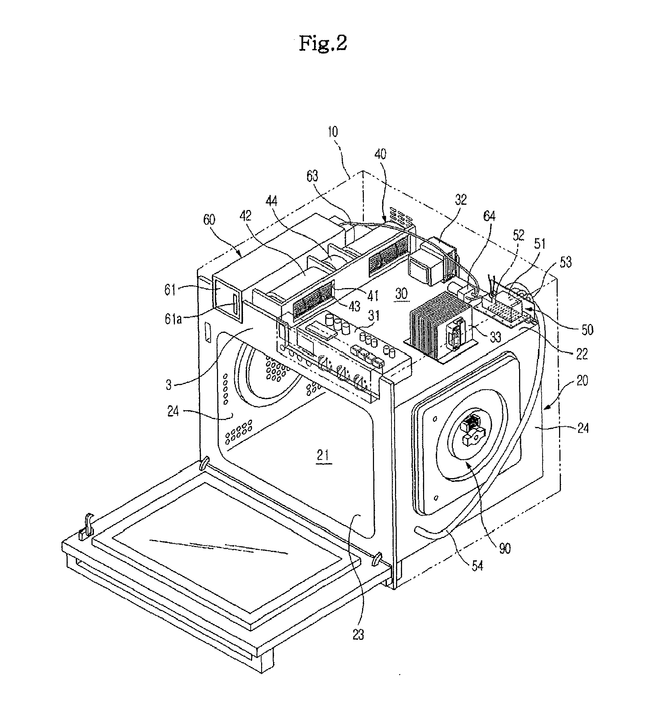

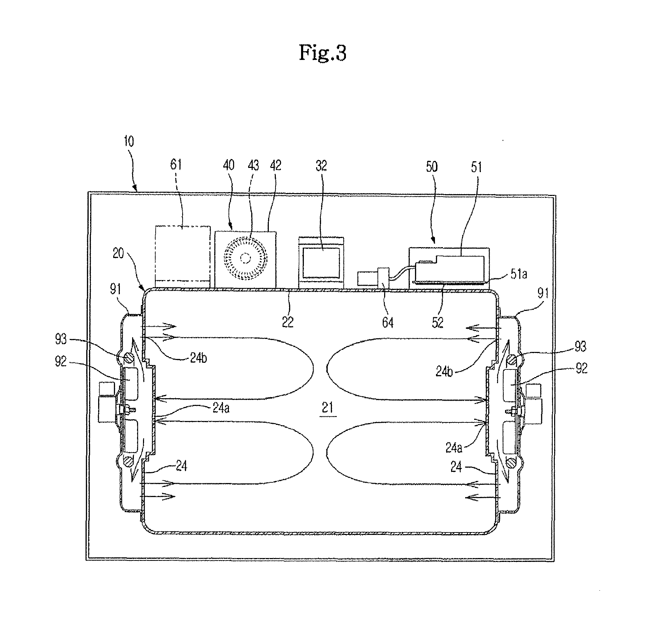

FIG. 1 is a front view illustrating the structure of a cooking apparatus according to an embodiment of the present invention, FIG. 2 is a perspective view illustrating the structure of the cooking apparatus according to an embodiment of the present invention, and FIG. 3 is a sectional view illustrating the structure of the cooking apparatus according to an embodiment of the present invention.

Referring to FIGS. 1 and 2, the cooking apparatus includes an outer case 10 forming an external appearance of the cooking apparatus, and an inner case 20 installed in the outer case 10 while being spaced apart from the outer case 10 to form a cooking chamber 21 therein.

The inner case 20 has a top plate 22, a bottom plate 23, side plates 24, and a rear plate 25, which define the cooking chamber 21 in the inner case 20. Various electric parts are accommodated in a space formed between the inner case 20 and the outer case 10.

A machine room 30 is provided in a space formed between the upper portion of the cooking chamber 21 (that is, the top plate 22 of the inner case 20) and the outer case 10 to install various electronic components, such as a printed circuit board 31, therein. A blower 40 is provided at one side of the machine room 30 to cool the electronic components installed in the machine room 30. The blower 40 includes a fan casing 42 having an opening 41 communicating with the machine room 30, a cooling fan installed in the fan casing 42, and a fan motor 44 driving the cooling fan 43.

Provided above the cooking chamber 21 are a steam generator 50 generating steam to feed the steam into the cooking chamber 21, a water feeder 60 feeding water into the steam generator 50, a magnetron 32 providing microwaves into the cooking chamber 21, and a high-voltage transformer 33 applying high-voltage to the magnetron 32.

The water feeder 60 includes a water bucket 61 installed in opposition to the machine room 30 while interposing the blower 40 therebetween, a water feeding tube 63 feeding water of the water bucket 61 to the steam generator 50, and a water feeding pump 64 connected to the water feeding tube 63 to control the amount of water fed into the water feeding tube 63.

The steam generator 50 includes a steam vessel 51 installed at one edge portion of the machine room 30 to store water fed from the water feeder 60, and a steam heater 62 evaporating water by applying heat to water. The steam heater 52 includes a plane heater attached to a bottom plate 51a of the steam vessel 51. The plane heater can apply heat over the whole area of water, thereby rapidly generating steam.

A steam feeding tube 53 is connected to an upper portion of the steam vessel 51, in such a manner that the steam generated from the steam vessel 51 can be fed into the cooking chamber 21. The steam feeding tube 53 is communicated with the cooking chamber 21 through steam holes 21a (see FIG. 1) formed at a rear surface of the cooking chamber 21. In addition, a drain tube 54 is connected to a lower portion of the steam vessel 51 to drain water contained in the steam vessel 51.

Referring to FIG. 3, a convection device 90 is installed at an outer sidewall of the cooking chamber 21 to heat and circulate air or steam contained in the cooking chamber 21. The convection device 90 has functions identical to those of a convection device installed in a conventional oven. When cooking the food by using the steam, the convection device 90 reheats the steam contained in the cooking chamber 21, thereby generating overheated steam and feeding the overheated steam to the cooking chamber 21.

The convection device 90 includes a heater case 91 installed at outer portions of the side plates 24 of the inner case 20, a circulation fan 92 provided in the heater case 90 to circulate air or steam, and a convection heater 93 installed at an outer peripheral portion of the circulation fan 92 so as to heat air or steam being circulated. The circulation fan 92 is a centrifugal fan having a plurality of blades. The circulation fan 92 sucks air or steam contained in the cooking chamber 21 by using a suction port provided at the center of the circulation fan 92 and then outputs the air or steam in a radial direction thereof. The air or steam output from the circulation fan 92 is heated when it passes through the convection heater 93.

The side plates 24 are formed with a plurality of intake holes 24a and discharge holes 24b to circulate steam contained in the cooking chamber 21. The intake holes 24a are positioned at the center of the side plates 24 corresponding to the suction port of the circulation fan 92 and the discharge holes 24b are positioned at an outer peripheral portion of the side plates 24.

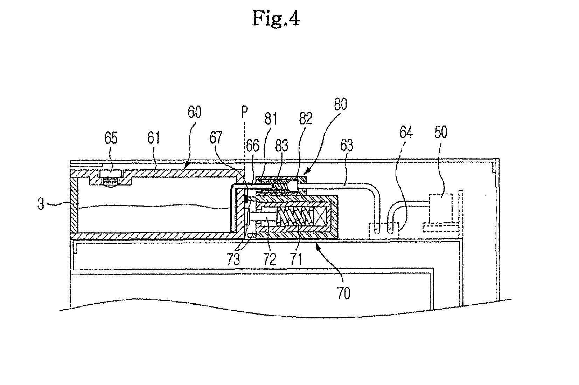

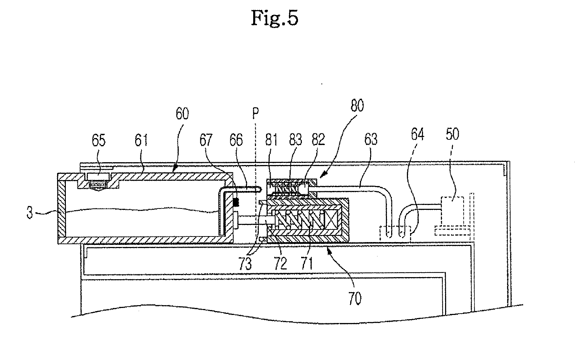

FIG. 4 is a sectional view showing the water bucket installed in the cooking apparatus, and FIG. 5 is a sectional view showing the water bucket separated from the cooking apparatus.

Referring to FIGS. 4 and 5, the water bucket 61 is installed in opposition to the machine room 30 while interposing the blower 40 therebetween, and is detachably coupled to a front panel 3 provided on a front portion of the outer case 10. A transparent window 61 a is formed on a front portion of the water bucket 61 to allow the user to check the amount of water contained in the water bucket 61. The transparent window 61 a can be replaced with a water level sensor (not shown) installed in the water bucket 61. Further, an alarm or a lamp can be additionally provided.

In addition, a water injection port 65 is formed on the top surface of the water bucket 61 to allow the user to inject water into the water bucket 61, and a water feeding port 66 extends from the rear surface of the water bucket 61 to feed water into the steam generator 50. Further, a sensor unit 67 is installed below the water feeding port 66 to detect the water bucket 61 when the water bucket 61 is separated from a connector which will be described later. The sensor unit 67 includes a limit sensor, a contact sensor, a pressure sensor, or a micro-switch capable of detecting the water bucket 61 being mounted on or separated from the front panel 3.

In addition, a pop-up unit 70 is provided at the rear portion of the water bucket 61 to facilitate detachment/attachment of the water bucket 61. The pop-up unit 70 may be of the type used in a ball-point pen, a cassette deck of an audio device, a cup supporter provided in a vehicle, etc. A push rod 72 of the pop-up unit 70 is moved by an elastic member 71, thereby repeatedly moving/retreating an object (specifically the water bucket) to/from a predetermined position.

That is, the water bucket 61 moves to or retreats from a first position P by the pop-up unit 70 such that the water bucket 61 can be selectively communicated with the water feeding tube 63. When the water bucket 61 retreats from the first position P, the water bucket 61 partially protrudes from the front panel 3. A stopper 73 protrudes from the front surface of the pop-up unit 70 in parallel with the push rod 72 to restrict the movement of the water bucket 61.

In addition, the water feeding port 66 provided at the rear portion of the water bucket 61 cooperates with the pop-up unit 70 in such a manner that the water feeding port 66 can communicate with the water feeding tube 63 in the first position P. When the water bucket 61 retreats from the first position P, the water feeding port 66 is not communicated with the water feeding tube 63. To this end, a connector 80 equipped with a packing member (not shown) is provided at an end portion of the water feeding tube 63.

The connector 80 includes a push unit that moves the water bucket 61 regardless of the weight of water contained in the water bucket 61. The push unit has a cylindrical shape and includes a front section 81 and a rear section 82, which communicate with each other. An elastic member 83 is provided between the front and rear sections 81 and 82. In the first position P, the elastic member 83 is compressed by the water feeding port 66. If the water bucket 61 is moved back from the first position P by the pop-up unit 70, the water feeding port 66 returns to its initial position by the elastic member 83.

Meanwhile, although not illustrated in the figures, a guide rail or a roller can be installed between the water bucket 61 and the machine room 30 to facilitate the operation of the pop-up unit 70 by reducing friction.

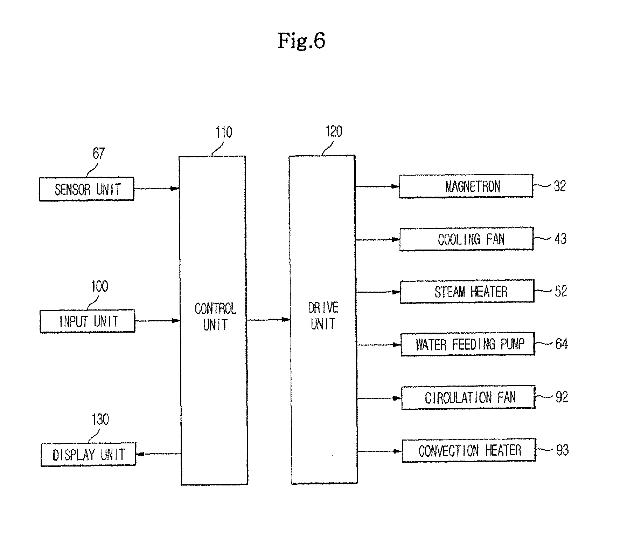

FIG. 6 is a block view illustrating the structure of the cooking apparatus. As shown in FIG. 6, the cooking apparatus includes a sensor unit 67, an input unit 100, a control unit 110, a drive unit 120 and a display unit 130.

The input unit 100 includes a plurality of keys provided on the front panel 3 to allow the user to input desired cooking information (cooking time, menu, cooking start/end, etc.) into the control unit 110.

The control unit 110 includes a microcomputer controlling various devices of the cooking apparatus according to the cooking information input thereto through the input unit 100. The control unit 110 detects the water bucket 61 being separated from the connector 80 through the sensor unit 67. At this time, the control unit 110 operates the water feeding pump 64 such that water remaining in the water feeding tube 63 is introduced into the steam generator 50, thereby preventing water from falling down when the bucket 61 is separated from the cooking apparatus. Since water remaining in the water feeding tube 63 is removed, a short circuit of electric parts installed adjacent to the water bucket 61 can be prevented and the sanitary problems are not incurred.

In addition, when the water bucket 61 is separated from the connector 80, the control unit 110 presets the operation time of the water feeding pump 64 such that the water feeding pump 64 can be operated for a predetermined period of time to introduce all of the water stored in the water feeding tube 63 into the steam generator 50.

The drive unit 120 drives the magnetron 32, the cooling fan 43, the steam heater 52, the water feeding pump 64, the circulation fan 92, and the convection heater 93 according to the drive control signals of the control unit 110. The display unit 130 displays the cooking time, the menu or the operational state of the cooking apparatus according to the display control signal of the control unit 110.

Hereinafter, the operation and the effect of the cooking apparatus having the above structure and the control method thereof will be described.

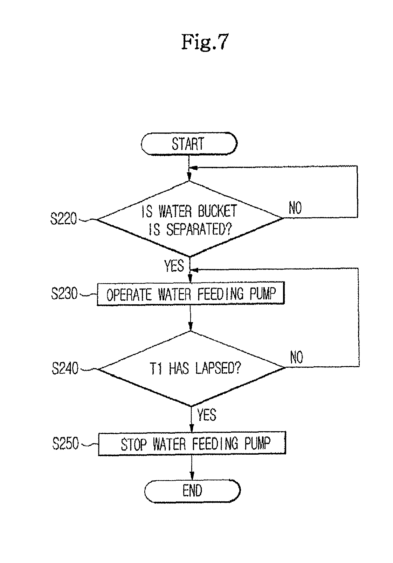

FIG. 7 is a flowchart illustrating the control of the present cooking apparatus. In an initial stage, the water bucket 61 is installed in the cooking apparatus, as shown in FIG. 4.

FIG. 4 shows the water bucket 61 installed in the cooking apparatus, in which the water feeding port 66 of the water bucket 61 is connected to the connector 80 of the water feeding tube 63.

First, the user puts the food into the cooking chamber 21 and selects desired cooking information (for instance, steam cooking) by manipulating the input unit 100. Then, the control unit 110 operates the water feeding pump 64 so that water contained in the water bucket 61 is fed into the steam vessel 51 of the steam generator 50 by way of the connector 80, the water feeding tube 63, and the water feeding pipe 64.

Water fed into the steam vessel 51 is evaporated by the steam heater 52 so that steam is generated. This steam is supplied into the cooking chamber 21 through the steam feeding tube 53, thereby cooking the food.

If the user wants to separate the water bucket 61 from the cooking apparatus when the cooking process is being performed or when the cooking process is stopped, the user pushes down the water bucket 61 installed in the cooking apparatus as shown in FIG. 4. In this case, the push rod 72 of the pop-up unit 70 temporarily retreats and then moves forward by the elastic member 71, thereby pushing the water bucket 61. At this time, the water feeding port 66 connected to the connector 80 is also moved forward by the elastic member 83, so that the water bucket 61 protrudes forward beyond the front panel 3 even if a large amount of water is contained in the water bucket 61.

When the user separates the water bucket 61 from the cooking apparatus, water remaining in the water feeding tube 63 and the connector 80 connected to the water feeding port 66 of the water bucket 61 may fall down, thereby causing a short circuit of electric parts installed adjacent to the water bucket while incurring sanitary problems.

To solve these problems, the sensor unit 67 installed at the rear portion of the water bucket 61 detects the water bucket 61 being separated from the connector 80 and sends a signal to the control unit 110.

Upon receiving the signal from the sensor unit 67, the control unit 110 determines whether the water bucket 61 is separated from the cooking apparatus (S220). If it is determined in operation S220 that the water bucket 61 is separated from the cooking apparatus, the control unit 110 operates the water feeding pump 64, thereby introducing water remaining in the connector 80 and the water feeding tube 63 into the steam generator 50 (S230). Thus, water is prevented from falling down when the water bucket 61 is separated from the connector 80. In addition, since water remaining in the water feeding tube 63 is removed, the short circuit of electric parts installed adjacent to the water bucket 61 can be prevented and the sanitary problem is not incurred.

Next, the control unit 110 counts the operation time of the water feeding pump 64 and compares the counted operation time with a predetermined reference time (T1, which is preset such that water remaining in the connector and the water feeding tube can be sufficiently removed) (S240). If it is determined in operation 240 that the reference time T1 has not lapsed, the control unit 110 continuously operates the water feeding pump 64 until the reference time T1 has lapsed.

After that, the control unit 110 stops the operation of the water feeding pump 64 and ends the algorithm to remove water remaining in the connector 80 and the water feeding tube 63.

As described above, according to the cooking apparatus and the control method of the embodiment of the present invention, the water feeding pump is operated as the water bucket storing water to be fed into the steam generator is separated from the cooking apparatus, thereby introducing water remaining the connector and the water feeding tube into the steam generator. Therefore, water is prevented from falling down onto the electric parts installed adjacent to the water bucket and the sanitary problems do not occur.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A cooking apparatus cooking food by using steam, the cooking apparatus comprising:
a water bucket;
a steam generator;
a water feeding tube;
a water feeding pump feeding water contained in the water bucket to the steam generator through the water feeding tube;
a sensor unit detecting whether the water bucket is separated from the water feeding tube; and
a control unit controlling an operation of the water feeding pump based on the detecting of the sensor.

2. The cooking apparatus as claimed in claim 1, wherein, if the sensor unit detects the water bucket being separated from the water feeding tube, the control unit operates the water feeding pump to introduce water remaining in the water feeding tube into the steam generator.

3. The cooking apparatus as claimed in claim 2, wherein the sensor unit is installed at a connection part between the water bucket and the water feeding tube to detect the water bucket being separated from the water feeding tube.

4. The cooking apparatus as claimed in claim 3, wherein the sensor unit includes a limit sensor, a contact sensor, a pressure sensor, or a micro-switch.

5. A cooking apparatus cooking food by using steam, the cooking apparatus comprising:
a water bucket;
a steam generator;
a connector;
a water feeding tube;
a water feeding pump feeding water contained in the water bucket to the steam generator through the connector and the water feeding tube;
a sensor unit detecting whether the water bucket is separated from the water feeding tube; and
a control unit operating the water feeding pump to introduce water remaining in the water feeding tube and the connector into the steam generator when the sensor unit detects the water bucket being separated from the water feeding tube.

6. The cooking apparatus as claimed in claim 5, wherein the sensor unit is installed at a connection part between the water bucket and the connector to detect the water bucket being separated from the water feeding tube.

7. The cooking apparatus as claimed in claim 6, wherein the sensor unit includes a limit sensor, a contact sensor, a pressure sensor, or a micro-switch.

8. A method of controlling a cooking apparatus cooking food by using steam, the cooking apparatus including a water bucket, a steam generator, and a water feeding pump for feeding water contained in the water bucket to the steam generator through a water feeding tube, the method comprising:
detecting whether the water bucket is separated from the water feeding tube; and
operating the water feeding pump, thereby introducing water remaining in the water feeding tube into the steam generator, when the sensor unit detects the water bucket being separated from the water feeding tube.

9. The method as claimed in claim 8, further comprising generating a signal generated from a limit sensor, a contact sensor, a pressure sensor, or a micro-switch installed at a contact position between the water bucket and the water feeding tube based on the detecting.

10. The method as claimed in claim 8, further comprising a stopping an operation of the water feeding pump when water remaining in the water feeding tube has been completely introduced into the steam generator comprising counting an operation time of the water feeding pump.

11. A cooking apparatus cooking food by using steam, the cooking apparatus comprising:
a bucket;
a sensor detecting a position of the bucket; and
a pump pumping water according to the detecting of the position.

12. The cooking apparatus as claimed in claim 11, further comprising:
a steam generator; and
a fluid passage to pass the water between the bucket and the steam generator,
the pump pumping the water to the steam generator when the sensor detects the bucket is separated from the fluid passage.
